# EUROPÄISCHE PATENTSCHRIFT

(11) **EP 0 575 771 B1**
(45) Veröffentlichungstag und Bekanntmachung des Hinweises auf die Patenterteilung: **10.02.1999**
(21) Anmeldenummer: 93108551.8
(22) Anmeldetag: 27.05.1993
(51) Int. Cl.: E04B 1/86, B29C 67/20

(54) **Formteil aus einer oder mehreren Schaumstoffplatten**
Shaped article of one or a plurality of foam sheets
Pièce façonnée d'une ou plusieurs plaques en matière cellulaire

(30) Priorität: 25.06.1992 AT 1293/92
(43) Veröffentlichungstag der Anmeldung: 29.12.1993
(73) Patentinhaber: C.A. GREINER & SÖHNE GESELLSCHAFT M.B.H., 4550 Kremsmünster (AT)
(72) Erfinder: Eder, Bernhard, A-4020 Linz/Donau (AT); Priestner, Günther, A-4400 Steyr (AT)
(74) Vertreter: Secklehner, Günter, Dr.

(56) Entgegenhaltungen:
- AT-B- 376 264
- DE-A- 3 403 386
- DE-B- 1 629 657
- DE-B- 2 460 910
- DE-B- 2 729 738
- GB-A- 2 040 948

## Beschreibung

Die Erfindung betrifft ein Formteil, wie dieser im Oberbegriff des Patentanspruches 1 beschrieben ist.

Aus der GB-A 2 040 948 ist ein Verfahren zur Herstellung von schallabsorbierenden Schaumstoffplatten bzw. eine derartige schallabsorbierende Schaumstoffplatte unter Schutz gestellt, die aus einem überwiegend geschlossenzelligen Schaumkunststoff besteht. Bei dem Verfahren zur Herstellung der schalldämmenden Schaumstoffplatte wird derart vorgegangen, daß die fertig gestellte Schaumstoffplatte auf 50 % bis 66 % ihrer Ausgangsdicke mechanisch verdichtet wird, wobei die geschlossenzellige Schaumstoffstruktur bzw. Zellstruktur zerstört und die einzelnen Stege zwischen den einzelnen Zellen aufgebrochen werden. Diese Verdichtung der Platte bzw. das Zerbrechen der Zellstruktur und der Zellwände soll zu einer erhöhten Luftdurchlässigkeit und damit zu einer verbesserten Schallabsorbtion führen. Diese Verdichtung der Platten erfolgt bei Temperaturen unter 120°C. Nachteilig ist hierbei, daß aufgrund der mechanischen Beanspruchung der Zellstruktur, insbesondere bei verschiedenen Herstellungsqualitäten des Schaumstoffes nicht immer sichergestellt werden kann, daß die Zellstege und Zellwände der geschlossenen Zellen des Schaumkunststoffes bei dieser mechanischen Verdichtung tatsächlich zerstört werden und somit kann in vielen Fällen die gewünschte Schalldämmung nicht erzielt werden.

Eine weitere mehrlagige Schaumstoffplatte, insbesondere eine Trittschalldämmplatte ist aus der DE-A1-34 03 386 bekannt geworden, bei welcher auf eine Lage aus Polystyrolschaum auf zumindest einer Oberfläche eine weitere Lage aus einem Polyethylenschaum mittels eines Kaschiermittels aufgebracht und mit dieser fest verbunden ist. Dadurch wird ein Plattenaufbau gebildet, bei welchem einzelne Platten unterschiedlicher Werkstoffe sowie Festigkeiten und damit verbunden mit unterschiedlicher Dichte zu einem Bauteil zusammengefügt werden. Dadurch wird ein einteiliger Bauteil jedoch aus zumindest zwei zueinander unterschiedlichen Stücken gebildet, welche in ihrer Gesamtheit das Trittschalldämmaterial ausbilden.

Der vorliegenden Erfindung liegt die Aufgabe zugrunde, ein Formteil bzw. ein Verfahren zur Herstellung eines derartigen Formteils zu schaffen, welcher bzw. mit welchem auf die gewünschte Luftdurchlässigkeit abgestellte mit einer entsprechenden Anzahl von offenen Zellen versehene Schaumstoffplatten durch Veränderung ihrer Zellstruktur auf die gewünschten Schallschutzeigenschaften angepaßt werden können.

Diese Aufgabe der Erfindung wird durch die im Kennzeichenteil des Patentan spruches 1 angegebenen Merkmale gelöst. Der überraschende Vorteil dieser scheinbar einfachen Lösung liegt darin, daß der grundsätzlich offenzellige Mittelbereich der Schaumstoffplatte gezielt verdichtet wird, wodurch sich neben der Dichteerhöhung auch eine Verringerung des Durchtrittsquerschnittes und somit eine Ventilwirkung für den Luftdurchtritt in Form einer Verzögerung des Luftschalldurchtrittes ergibt. Andererseits wirkt aufgrund der Dichteerhöhung dieser Mittelbereich gleichzeitig als Körperschalldämmelement und es können nunmehr bei einer aus einem einheitlichen Kunststoffschaum hergestellten Schaumstoffplatte beide Forderungen des Anwenders nach ausreichender Luft- und Körperschalldämmung erreicht werden. Ein weiterer Vorteil dieser Lösung liegt darin, daß der auf die 20-fache bis 30-fache Dichte verdichtete Mittelbereich über einen Übergangsbereich in die in ihrer Dichte gegenüber dem Ursprungszustand unveränderten Randbereiche bzw. Randzonen übergeht und somit eine progressive Dämpfung bzw. Verlangsamung der durch den Schall hervorgerufenen Luftströmungen erreicht wird. Durch die Verdichtung der Mittelzonen wird weiters eine gleichmäßige Verdichtung und Dichteerhöhung über den gesamten Querschnitt der Platte erzielt.

Eine weitere vorteilhafte Ausgestaltung ist im Patentanspruch 2 gekennzeichnet, wobei vorteilhaft ist, daß durch die thermische Verdichtung eine plastische bleibende Verformung erzielt wird, die es auch nach dem Auskühlen der Schaumstoffplatte ermöglicht, die Schallcharakteristiken über lange Dauer beizubehalten.

Von Vorteil ist aber auch eine andere Weiterbildung nach Patentanspruch 3, wodurch ein sandwichartiger Bauteil mit einer im Mittelbereich integrierten, plattenartigen Struktur aus einem einstückigen Kunststoffschaumblock hergestellt werden kann. Durch die Abstimmung der Dichte und der Trageigenschaften dieser im Mittelbereich angeordneten Verstärkungsschicht kann in einfacher Weise auf unterschiedliche, mechanische Beanspruchungen des Schallschutzelementes abgestellt werden.

Eine andere Weiterbildung beschreibt Patentanspruch 4. Durch die variable Anpassung des Verdichtungsfaktors im Mittelbereich der Schaumstoffplatte kann diese in ihrem Steifigkeits- und Festigkeits- sowie Körperschalldämmeigenschaften einfach an die unterschiedlichsten Anforderungen angepaßt werden, obwohl für diese unterschiedlichen Anwendungsfälle mit dem gleichen Rohmaterial gearbeitet werden kann.

Eine weitere Ausführungsvariante ist im Patentanspruch 5 gekennzeichnet, wodurch ein Bauteil geschaffen werden kann, der in seinem Mittelbereich eine Massiv struktur, also einem vollen Material entspricht, während dessen Randbereiche elastisch rückstellbar und elastisch verformbar mit den Charakteristiken eines Weichschaums ausgebildet sein können.

Bei der Weiterbildung nach Patentanspruch 6 ist vorteilhaft, daß durch den Dichteverlauf vom Mittelbereich ausgehend ohne zusätzliche Maßnahmen ein symmetrischer Aufbau einer Schaumstoffplatte in einfacher Weise erzielt werden kann.

Eine andere Ausführungsvariante nach Patentanspruch 7 hat den Vorteil, daß eine Aufteilung der Luft- und Schalldämmeigenschaften auf den Oberflächen- und Mittelbereich einer Schaumstoffplatte mit den Anforderungen an die Festigkeit, wie beispielsweise Widerstandsfähigkeit der Oberfläche verbunden werden kann und dadurch die Widerstandsfestigkeit solcher Schaumstoffplatten an die unterschiedlichen Einsatzfälle einfacher angepaßt werden kann.

Durch die Weiterbildung nach Patentanspruch 8 kann unabhängig von der Verdichtung der Schaumstoffstruktur in der Schaumstoffplatte eine Erhöhung der Festigkeit bzw. der Körperschalldämmeigenschaften durch den Einsatz der Verstärkungselemente geschaffen werden. Dazu kommt, daß damit auch ausreichende Festigkeiten für die Befestigung derartiger Schaumstoffplatten mit ausreichender Ausreißfestigkeit auch in extremen Anwendungsbereichen möglich sind.

Eine vorteilhafte Ausgestaltung nach Patentanspruch 9 ermöglicht eine gezielte Verstärkung der einzelnen Oberflächenbereiche, um beispielsweise dadurch auf der Rückseite der Schallschutzplatte eine auch gegen höhere Schwingungs- und Beschleunigungskräfte widerstandsfähige Befestigung der Schaumstoffplatte, beispielsweise in Kraftfahrzeugen, Schienenfahrzeugen oder Flugzeugen zu ermöglichen.

Die Ausgestaltung nach Patentanspruch 10 ermöglicht in vorteilhafter Weise eine weite Variation der Eigenschaften einer fertigen Schaumstoffplatte von hochelastischen, selbstrückstellbaren Dämpfungsbereichen und massiven widerstandsfähigen zur Befestigung bzw. zur Körperschalldämmung geeigneten Zonen im Mittelbereich.

Durch die weitere Ausgestaltung nach Patentanspruch 11 kann die Struktur des Grundmaterials in seinen Festigkeits- und Elastizitäts- sowie Reflexionseigenschaften bei Belastungen durch Druckkräfte bzw. mit Schall und Temperatur an unterschiedliche Voraussetzungen angepaßt werden.

Die Weiterbildung nach Patentanspruch 12 ermöglicht die Wiederverwertung und die Ausnutzung der ein eventuell höheres Raumgewicht aufweisenden Kunststoffabfälle zur massiveren Erhöhung des Raumgewichts und der Stabilität der Schaumstoffplatte in verdichteten Bereichen.

Die Ausgestaltung nach Patentanspruch 13 ermöglicht, daß eine Erhitzung zum Verbinden der Einzelplatten der Schaumstoffplatte bzw. deren Mittelbereich durch Energiestrahlung, beispielsweise Mikrowellen oder Hochfrequenzstrahlung erfolgen kann.

Die Weiterbildung nach Patentanspruch 14 ermöglicht das Einbringen von hochfesten Materialien, welche trotzdem noch eine Behandlung der Schaumstoffplatte mit Energiestrahlung ermöglichen.

Die Erfindung beschreibt aber auch ein Verfahren zur Herstellung eines Formteils gemäß dem Oberbegriff des Patentanspruches 15.

Dieses Verfahren ist durch die im Kennzeichenteil des Patentanspruches 15 definierten Maßnahmen gekennzeichnet. Die Vorteile dieses Verfahrens liegen darin, daß vom Mittelbereich der Schaumstoffplatte in Richtung der Oberflächenbereiche eine gleichförmige Erhitzung mit sehr hohen Temperaturen und damit hohen Energien erfolgen kann ohne daß die Oberflächenschichten der Schaumstoffplatte nachteilig verändert bzw. zerstört oder verbrannt werden. Dadurch kann in vorteilhafter Weise die Produktionszeit für die Verdichtung und die Herstellung einer Schwerschicht im Inneren einer Schaumstoffplatte erheblich reduziert und eine gesteuerte Dichtezunahme im Mittelbereich geschaffen werden. Gleichzeitig kann aber auch jene Zeit, in der die Schaumstoffplatte nach dem Erhitzen der Zellstruktur bzw. des zu verdichtenden Bereiches unter Druckbelastung gehalten werden muß, ebenso wie die Einwirkungszeit der Energiezufuhr auf 10 % bis 20 % der bisher benötigten Produktionszeiten verkürzt werden.

Die Maßnahmen nach Patentanspruch 16 ermöglichen die Anwendung von herkömmlichen in der Technik bereits bekannten Heizgeräten zur Erzielung des gewünschten Erwärmungs- und Verdichtungseffektes des Schaumstoffes im Inneren der Schaumstoffplatte.

Die vorteilhafte Vorgangsweise gemäß Patentanspruch 17 bietet den Vorteil, daß in Verbindung mit dem zuvor beschriebenen Verfahren unmittelbar nach der Einwirkung der Energiestrahlung das behandelte Produkt bzw. die Schaumstoffplatte gekühlt bzw. mit Kaltluft durchströmt werden kann, um diesen Erstarrungspunkt rascher zu erreichen, da zur Temperatureinbringung keine erhitzten, plattenförmigen Körper benötigt werden.

Ein Vorgehen gemäß den Maßnahmen in Patentanspruch 18 ermöglich die Festigkeit der Schaumstoffplatten durch die Zugabe von Altmaterialien beliebig zu verändern.

Durch das Vorgehen nach Patentanspruch 19 wird auch bei Zusatz von Füllmaterialien noch eine ausreichende Haftung und Verbindung dieser einzelnen Teile der Füllmaterialien über den neu zugesetzten Kunststoffschaum sichergestellt.

Durch die Maßnahme nach Patentanspruch 20 wird eine gute Durchlüftung mit Füllmaterialien versetzten und damit dichteren Schaumstoffplatten erzielt.

Schließlich wird durch die Maßnahme nach Patentanspruch 21 erreicht, daß auch die eingesetzten Zuschlagstoffe ausreichend thermisch verdichtet werden können.

Die Erfindung wird im nachfolgenden anhand der in den Zeichnungen dargestellten Ausführungsbeispiele näher erläutert.

Es zeigen:

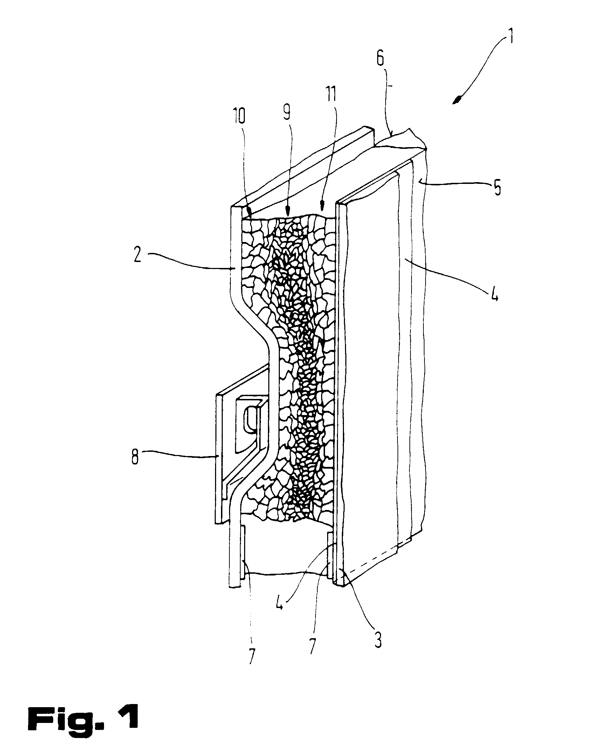

- Fig. 1: die erfindungsgemäße Schaumstoffplatte in Stirnansicht geschnitten und vereinfachter, schematischer Darstellung;
- Fig. 2: einen Teil der erfindungsgemäßen Schaumstoffplatte nach Fig.1 in vereinfachter, schematischer, schaubildlicher Darstellung;
- Fig. 3: eine erfindungsgemäße Schaumstoffplatte ausgebildet als Profilelement in Stirnansicht, geschnitten;
- Fig. 4: eine Fertigungsanlage zur Herstellung von erfindungsgemäßen Schaumstoffplatten in vereinfachter, schematischer Darstellung;
- Fig. 5: eine andere Ausführungsvariante einer erfindungsgemäßen Schaumstoffplatte mit in der Schaumstoffplatte angeordneten Füllstoffen in schaubildlicher, schematisch vereinfachter Darstellung, teilweise geschnitten;
- Fig. 6: einen Teilbereich einer erfindungsgemäßen Schaumstoffplatte in vereinfachter, schaubildlicher, schematischer Darstellung.

In Fig. list eine Schaumstoffplatte 1 gezeigt, die als Formteil ausgebildet ist.

Diese Schaumstoffplatte 1 ist beim dargestellten Ausführungsbeispiel mit zwei Deckschichten 2,3 verbunden. Die Verbindung zwischen den Deckschichten 2,3 und der Schaumstoffplatte 1 kann auf beliebige Art und Weise erfolgen. So ist es unter anderem möglich, diese unter Zwischenschaltung einer Kleberschicht 4 miteinander zu verbinden. Die Kleberschicht 4 muß nicht durchlaufend, vollflächig vorgesehen sein, sondern kann ebenso durch bereichsweise über eine Oberfläche 5 bzw. 6 verteilte Klebebereiche mit der Schaumstoffplatte 1 verbunden sein. Die Verbindung der Deckschichten 2,3 mit der Schaumstoffplatte 1 kann aber auch über Schmelzklebefolien bzw. Schmelzklebepulver oder sogenannten Prepregs erfolgen. Bei den Schmelzklebepulvern handelt es sich meistens um Phenolharzpulver, welches neben der Klebewirkung auch eine zusätzliche Versteifung der Schaumstoffplatte bewirken kann. Die Schmelzklebefolien werden dagegen vielfach durch Polyäthylenfolien bzw. Polyurethanklebefolien gebildet. Die Prepregs stellen dagegen an ihrer Oberfläche unter Raumtemperatur und ortsüblichen Luftdruck nicht klebende Einlagekörper dar, die gegebenenfalls mit entsprechenden Fasern oder Fäden, Geweben, Netzen, Gitter oder dgl. daraus verstärkt sein können. Unter Druck und Temperatureinwirkung reagiert dann der in diesen Prepregs enthaltene Klebstoff aus und entfaltet seine Klebewirkung. Dabei ist es unter anderem auch möglich, daß der in diesen Prepregs enthaltene Kleber oder Kunststoff meist einen Kunststoffschaum unter Druck und Temperatur Gase freisetzt, die zu einem Aufschäumen des Klebers bzw. Kunststoffes in Art eines Schaumkunststoffes führen und eine innige Verbindung mit den diesen Prepregs benachbarten bzw. an diesen anliegenden Schichten bewirkt.

Im Bereich der Oberflächen 5, 6 können Verstärkungselemente 7, beispielsweise eingelegte Metallplatten vorgesehen sein, um in diesen Bereichen weitere Bauteile zu befestigen bzw. damit die Schaumstoffplatte 1 mit Halteteilen 8 zu verbinden.

Die Schaumstoffplatte 1 umfaßt einen Mittelbereich 9 und zwei Randbereiche 10, 11.

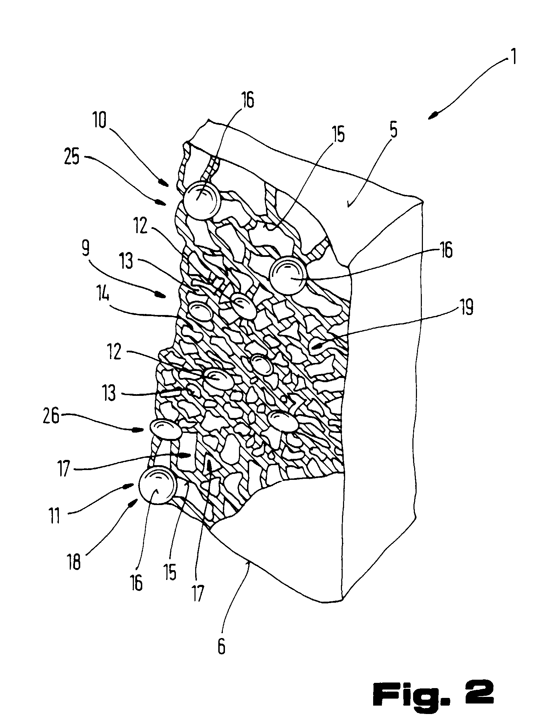

Wie nun besser aus Fig.2 zu ersehen ist, besteht der Mittelbereich 9, der von den beiden Randbereichen 10, 11, eingeschlossen ist, aus räumlich verformten Zellwänden 12 und Zellstegen 13, 14. In den Randbereichen 10, 11 sind dagegen Zellstege 15 und Zellwände 16 in ihrer ursprünglichen, durch den Schäumvorgang hergestellte Form im wesentlichen unbeeinfiußt und bestehen aus einem räumlichen Fachwerk, welches den überwiegend aus offenen Zellen 17 und wenigen geschlossenen Zellen 18 bestehenden Schaumstoff 19 bildet. Dieser Schaumstoff 19 ist beispielsweise durch einen Weichschaum, wie z.B. Polyurethan oder einen Polyätherschaum oder andere ähnliche bzw. gleichwertige Werkstoffe gebildet. Dieser üblicherweise in Art eines Blockschaums hergestellte Weich schaum wird dann durch bekannte Trennverfahren in einzelne Schaumstoffplatten 1 aufgeteilt.

Der Mittelbereich 9 weist gegenüber den Randbereichen 10, 11 eine erheblich höhere Dichte dadurch auf, da die Zellwände 12 und die Zellstege 13, 14 unter Druckeinwirkung und gleichzeitiger Erwärmung verdichtet bzw. verformt sind und somit der Luftraum zwischen den einzelnen Zellstegen 13, 14 und den Zellwänden 12 gegenüber den Zellwänden 16 und den Zellstegen 15 in den Randbereichen 10,11 verringert wird. Dabei kommt es in dem erhitzten Mittelbereich zu einem sogenannten Crack-Vorgang, der auch als thermisches Cracken bezeichnet wird.

Dabei kann es sich als vorteilhaft erweisen, wenn die Schaumstoffplatte nicht nur in ihrem Mittelbereich 9 sondern auch im Bereich ihrer Oberflächen oder zumindest einer ihrer Oberflächen bzw. umlaufenden Seitenkanten erwärmt wird. Dadurch wird die Abstrahlung von Wärmeenergie aus dem ebenfalls erhitzten Mittelbereich in den Randbereich verringert bzw. der Wärmezuwachs im Mittelbereich 9 zusätzlich unterstützt. Der Vorteil dieser Lösung liegt gegenüber einer ausschließlichen Erwärmung der Schaumstoffplatte 1 über deren Oberflächen 5,6 darin, daß die zum Aufwärmen der Oberflächen bei gleichzeitiger Erhitzung des Mittelbereichs 9 der Schaumstoffplatte 1 benötigte Wärmeenergie geringer ist und somit auch keine all zu hohen Temperaturen benötigt werden, die zu einem Zerstören bzw. Verbrennen der Schaumkunststoffteilchen im Bereich der Oberfläche 5,6 führen könnten.

Durch die unter Temperatur- und Druckeinwirkung erfolgte Verdichtung des Zellgefüges der Schaumstoffplatten 1 kann das Raumgewicht des Mittelbereiches 9 das 5-fache bis 30-fache, bevorzugt das 20-fache, nämlich zwischen 1.200 kg/m³ und 2.500 kg/m³ im Gegensatz zu dem Raumgewicht in den Randbereichen 10, 11 von ca. 40 kg/m³ bis 500 kg/m³ betragen.

Durch die Überführung der Zellstege 13, 14 bzw. Zellwande 12 in ihren plastischen Zustand bzw. in einen Zustand, in welchem deren Oberflächen soweit aufgeweicht sind, daß sie klebrig werden, wird eine bleibende Verformung und Verdichtung dieser Zellstege 13, 14 bzw. der Zellwände 12 erreicht, die beim nachfolgenden Erstarren zur Bildung einer Platte in Art einer Vielfaserplatte führt. Diese Vielzahl der untereinander verformten und ineinander verfilzten Zellstege bildet somit ein hochfestes Fasergewebe für die plattenartige Versteifung der Schaumstoffplatte 1 im Mittelbereich 9.

Diese plattenartige Versteifung der Schaumstoffplatte 1 im Mittelbereich 9 kann zwischen 0,5 mm und 5 mm, gegebenenfalls aber auch dicker sein. Die Gesamtdicke der Schaumstoffplatte 1 kann dabei an die jeweils gewünschten Einsatzbedingungen angepaßt werden und zwischen 2 cm und 20 cm betragen. Selbstverständlich ist es in diesem Zusammenhang auch möglich, durch entsprechende starke Erwärmung der Schaumstoffplatte 1 in den Oberflächenbereichen auch zusätzlich zum Mittelbereich 9 in den Oberflächenbereichen eine Verdichtung bzw. eine Verformung der Zellstege bzw. ein thermisches Cracken vorzunehmen um auch die Oberflächenbereiche der Schaumstoffplatte 1 zu verstärken bzw. gewünschte Festigkeits- oder Schalldämmeigenschaften und dgl. zu ermöglichen. Durch die unterschiedlichen Festigkeiten in den verschiedenen Schichten der Schaumstoffplatte 1 entsteht ein Sandwichaufbau und damit ein höher belastbarer Bauteil. Des weiteren kann durch die gleichzeitige Erhitzung in den Oberflächenbereichen auch eine Formgebung, vor allem eine räumliche Verformung erzielt werden.

Nach dem Unterschreiten des Erstarrungspunktes werden die verformten Zellstege 13,14 und Zellwände 12 in ihrer verdichteten und ineinander verbundenen Form fixiert, wodurch die erwünschte Dichte des Mittelbereichs 9 nachfolgend beibehalten werden kann.

Gleichzeitig mit dieser Verdichtung der Zellstruktur im Mittelbereich 9 wird aber auch das Durchgangsvolumen bzw. der Durchtrittsquerschnitt für den Luftdurchtritt verringert bzw. die Luft durch das verformte Zellgitter zu mehrfachen Umlenkungen gezwungen und damit verlangsamt. Dadurch wird, je nach den Verdichtungsverhältnissen im Mittelbereich 9 eine entsprechende Verlangsamung und Reduzierung sowie Dämmung des Luftschalls erreicht und gleichzeitig je nach der Dichteerhöhung im Mittelbereich 9 eine Körperschalldämmung bewirkt.

Die Einbringung der Wärmeenergie bzw. das Erhitzen beispielsweise vom Mittelbereich 9 der Schaumstoffplatte 1 kann nun bevorzugt durch Hochfrequenz-, Mittelfrequenz- oder Infraroterhitzung bzw. durch Energiestrahlen mit Mischfrequenzen erfolgen. Vor allem bei Verwendung von hochfrequenten Energiestrahlungen bzw. sogenannten Mikrowellen wird erreicht, daß der jeweils zu erwärmende Körper von innen nach außen, also von seinen Mittelbereich in Richtung der Oberflächen 5,6 erhitzt wird. Dies schafft nunmehr sehr gute Möglichkeiten, um in den beiden Oberflächenbereichen elastisch verformbare, in Art einer Feder wirkende Bereiche der Schaumstoffplatte 1 zu erhalten, wogegen im Mittelbereich 9 eine Schwer- bzw. Masseschicht zur Dämmung des Körperschalls gebildet werden kann, der über die anschließenden elastischen, als Feder wirkenden unverdichtenden Zonen der Sandwichplatte oder deren Schwingung gedämpft werden kann.

Die Zufuhr von Wärmeenergie in die Oberflächenbereiche der Schaumstoffplatte 1 kann über elektrische Heizstäbe bzw. durchströmendes heißes Wasser oder Öl von den Formelementen her auf die Schaumstoffplatte 1 erfolgen. Der Vorteil der elektrischen Heizstäbe liegt darin, daß sie sehr rasch regelbar sind und somit die Energiezufuhr zu den einzelnen Platten exakt geregelt werden kann. Die hierzu notwendigen Vorrichtungen für die Anordnung der elektrischen Heizstäbe bzw. zur Erhitzung mit heißem Wasser oder Öl sind aus dem Stand der Technik ebenso geläufig wie die zugehörigen Steuervorrichtungen zur Einstellung von gewünschten Temperaturen und deren Überwachung.

Die den Schaumstoffplatten 1 in den einzelnen Bereichen zuzuführende Wärmeenergie ist dabei so abzustimmen, daß es nicht zu einem Verbrennen bzw. völligem Zerfließen des Kunststoffmaterials kommt, sondern daß vielmehr die einzelnen Zellstege bzw. Zellwände soweit erhitzt sind, daß sie ihre Eigensteifigkeit verlieren und unter Druck, ohne zu brechen, plastisch verformbar sind. Dabei ist es vorteilhaft, wenn sie so stark erwärmt sind, daß sie an ihrer Oberfläche plastifiziert sind, sodaß sie während des Verformungsvorganges durch die dabei entstehende Haftkraft aneinander kleben bzw. festhaften, sodaß während des nachfolgenden Kühlvorganges die verdichtete Position in den jeweiligen Bereichen der Schaumstoffplatte 1 beibehalten werden kann.

Diese grundsätzlichen Überlegungen zu der Zufuhr der Wärmeenergie in die Schaumstoffplatte 1 treffen selbstverständlich für das hier beschriebene als auch für alle anderen beschriebenen Ausführungsbeispiele zu.

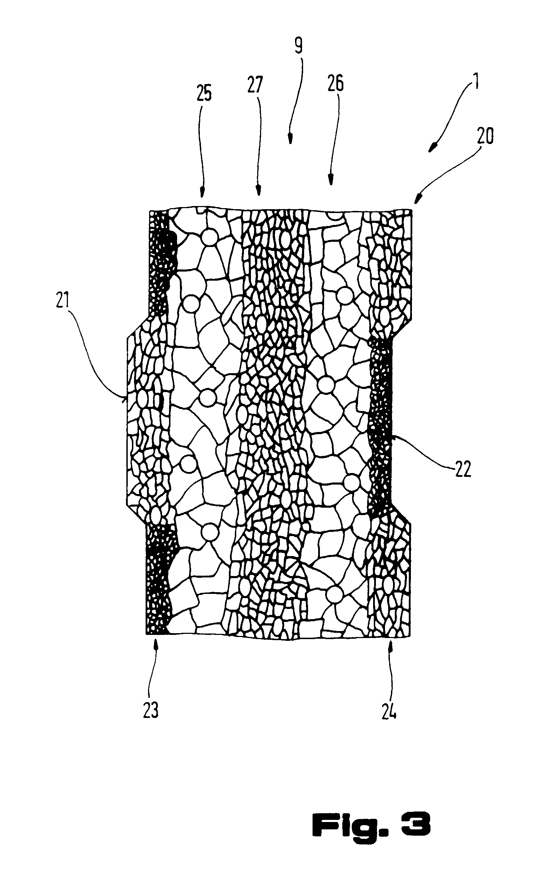

In der Fig. 3 ist eine Ausbildung der Schaumstoffplatte 1 in Form eines Profilelementes 20 gezeigt. Diese weist in Art eines Trapezprofiles profilierte Oberflächen 21,22 auf, wobei die dargestellte Form nur beispielhaft für eine Vielzahl von unterschiedlichen Oberflächengestaltungen gewählt wurde.

Dieses Profilelement 20 ist durch Umformung aus einer ebenflächigen Platte bzw. aus einem Block bzw. aus von einem Block gebildeten Platten unter Druckeinwirkung und gleichzeitiger Erwärmung mehrfach verdichtet bzw. verformt, sodaß im Bereich der Oberflächen 21,22 z.B. verdichtete Randzonen 23,24 und in Richtung zur Plattenmitte hin in die Ursprungsstruktur aufweisende Zwischenbereiche 25,26 übergeht. Eine Kernzone 27 des Mittelbereiches 9 des Profilelementes 20 weist eine verdichtete Zellstruktur auf, wodurch je nach Verdichtungsverhältnis der Kernzone 27 im Verhältnis zu den Randzonen 23,24 und den unverdichteten Zwischenbereichen 25,26 eine entsprechende Reduzierung und Dämmung des Luftschalls erreicht wird. Gleichzeitig wird je nach der Dichterhöhung in der Kernzone 27 eine Körperschalldämmung bewirkt. Durch die profilierte Ausbildung der Oberflächen 21,22 wird dabei eine in Abhängigkeit von den verdichteten Randzonen 23,24 höhere Bereitschaft zur Abstrahlung von Reflexionen des Schalls ausgeglichen

Das Profilelement 20 weist durch seinen sandwichartigen Aufbau, welcher durch die schichtweise Veränderung der Zellstruktur erreicht wird, eine hohe Eigensteifigkeit und gleichzeitig ein hohes Schalldämmverhalten auf, durch das sich das Profilelement 20 insbesondere als Schalldämmelement in lärmexponierten Bereichen eignet, welches einen geringen Aufwand an Hilfskonstruktionen für Abstützung und Halterungen der Profilelemente 20 benötigt.

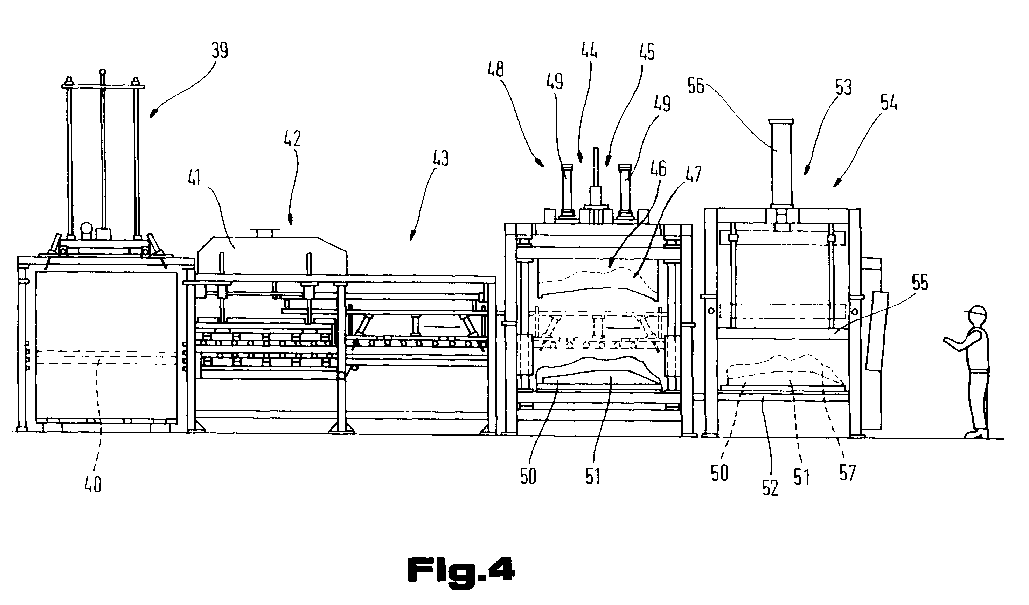

In der Fig. 4 ist eine Anlage zur Durchführung des erfindungsgemäßen Verfahrens dargestellt. Der beispielsweise in einer Blockform hergestellte Kunststoffschaumblock wird mit einer geeigneten Schneidevorrichtung in Schaumstoffplatten 1 aufgeteilt. Diese Schaumstoffplatten 1 werden danach über einen Manipulator 39, der einen höhenverstellbaren Förderer, insbesondere einen Bandförderer 40 aufweist, einer dem Manipulator 39 nachgeordneten mit einem Hochfrequenzgenerator 41 versehenen Heizvorrichtung 42 zugeführt. In dieser Heizvorrichtung 42 werden die nach dem bei der Herstellung der Schaumstoffblöcke bzw. Schaumstoffplatten 1 durch Aufschäumen und dem anschließenden Erkalten stabilisierten Schaumstoffplatten 1 bzw. Schaumstoffblöcke in eine bevorzugt zweiteilig ausgebildeten Aufnahme eingesetzt. In dieser Heizvorrichtung 42 wird die Schaumstoffplatte 1 bzw. der Schaumstoffblock über einen Hochfrequenzgenerator eine Hochfrequenzstrahlung, insbesondere im Bereich von 20 bis 40 MHz über eine vorbestimmte Zeitdauer ausgesetzt. Diese Hochfrequenzstrahlung bewirkt durch die Anregung der Moleküle zu Schwingungen eine Erwärmung.

Dadurch, daß die stärksten Widerstände gegen die Schwingung der Moleküle im Mittelbereich der hochfrequenten Strahlung ausgesetzten Werkstücke, insbesondere der Schaumstoffplatte 1 auftreten, erfolgt die Erwärmung bzw. Erhitzung der Schaumstoffplatte 1 üblicher Weise von der Mitte aus. Damit werden die Zellstege bei den offenen Zellen und die Zellwände der geschlossenen Zellen erhitzt und plastifiziert, sodaß sie zumindest in ihren Oberflächenbereich aufschmelzen und klebrig werden. Durch diese Temperatureinwirkung in Verbindung mit dem auf die Schaumstoffplatte 1 ausgeübten Druck wird das Ancracken der Molekülketten ermöglicht. Durch die starke Erhitzung im Mittelbereich der Platte wird die Wäremenergie räumlich eingeleitet und verhindert das es zu starken Verkürzungen der Molekülkette kommt, sodaß kein genügender Zusammenhalt des Materials gegeben ist und ölige Crackprodukte entstehen.

Üblicher Weise ist der Anteil der offenen Zellen in der Schaumstoffplatte 1 erheblich größer, als der Anteil geschlossener Zellen, wobei bei einem offenzelligen Kunststoffschaum die Anzahl der offenen Zellen in jedem Fall diejenigen der geschlossenen Zellen bei weitem überwiegt.

Zusätzlich ist es möglich, dies ist aber nicht zwingend notwendig - daß gleichzeitig zumindest eine der Oberflächen oder der umlaufenden Seitenkanten des Schaumstoffblockes bzw. der Schaumstoffplatte 1 ebenfalls erhitzt wird. Diese Erhitzung der Oberflächenzonen kann in üblicher Weise durch Beheizung der Formwände in der Heizvorrichtung 42 bzw. in der einem Manipulator 43 nachgeschalteten Formpresse 44 zum räumlichen Verformen der Kunststoffschaumblöcke bzw. Schaumstoffplatten 1 erfolgen. Die Heizvorrichtung 42 kann in vorteilhafter Weise auch als Heizpresse ausgebildet sein, wobei dann auch im Bereich der Heizvorrichtung 42 eine Erwärmung des Kunststoffschaumblockes bzw. der Schaumstoffplatte 1 unter Druckbelastung erfolgt. Die Beheizung der Formflächen in der Heizvorrichtung 42 bzw. der Formpresse 44 kann entsprechend den aus dem Stand der Technik bekannten Ausführungsvarianten erfolgen, wobei hierzu elektrische Heizpatronen oder entsprechend erhitzte Flüssigkeiten, die die Formflächen durchströmen, verwendet werden können. Ein Vorteil der gleichzeitigen Erhitzung zumindest einer Oberfläche bzw. mehrerer Oberflächen und der umlaufenden Seitenkanten des Kunststoffschaumblockes bzw. der Schaumstoffplatte 1 während des Erhitzens im Mittelbereich der Schaumstoffplatte 1 liegt darin, daß der Verlust der im Mittelbereich aufgebrachten Wärmeenergie in Richtung der Oberflächen der Schaumstoffplatte 1 durch die gleichzeitige Erwärmung in diesen Zonen verhindert werden kann.

Ein weiterer Vorteil der Erhitzung über den Mittelbereich unter gleichzeitiger Erhitzung in den Randzonen liegt darin, daß ein Großteil der Wärmeenergie durch die Energiestrahlung im Mittelbereich der Schaumstoffplatte aufgebracht wird, sodaß die Temperaturen im Bereich der Heizplatten, die der Oberfläche der Schaumstoffplatte 1 zugeordnet sind, in einen Bereich unter 200°C bis 250°C gehalten werden können. Diese Temperaturen reichen aus, um einen entsprechenden Hitzestau im Inneren der Schaumstoffplatte 1 aufzubauen, sodaß die über die hochfrequente Energiestrahlung eingebrachte Wärmeenergie nicht abgestrahlt werden kann. Diese muß aber nicht so hoch sein, wie bei jenen Verfahren, bei welchen die gesamte, zum thermischen Verdichten der Zellstruktur benötigte Energie über die Oberfläche der Schaumstoffplatte 1 eingebracht werden muß. Dadurch wird verhindert, daß auf der Oberfläche der Schaumstoffplatte 1 ein schmieriger Film aus öligen Crackprodukten, bedingt durch eine zu starke Verkürzung der Molekülketten bei zu hoher Temperatureinwirkung, wodurch kein genügender Zusammenhalt des Materials gegeben ist, entsteht.

Zudem kann aber auch erreicht werden, daß durch entsprechende Vorerhitzung der Schaumstoffplatten 1 bzw. des Kunststoffschaumblockes in den Oberflächen- bzw. Seitenkantenbereichen auch in diesen in entsprechende Erwärmung möglichen Umfang eine Verdichtung bzw. ein thermisches Cracken in den Oberflächenbereichen zu einer Verfestigung bzw. zu einem teilweise Verschließen der offenen Zellen im Oberflächenbereich fühlen kann. Somit ist es möglich, Schaumstoffplatten, wie sie beispielsweise in Fig.3 dargestellt und beschrieben sind, die sowohl im Bereich der Oberflächen 21,22 als auch im Mittelbereich höher verdichtet sind bzw. das Volumen der offenen Zellen erheblich geringer ist, als in den dazwischenliegenden Zwischenbereichen 25 und 26 herzustellen. Die Vorwahl der verschiedenen Temperaturen der Formflächen bzw. zum Erhitzen des Mittelbereiches 9 können über manuelle Einstellvorrichtungen an der Steuervorrichtung der Maschinenanlage oder durch ein gesamtes Steuer- und Ablaufprogramm über eine Rechenanlage vollautomatisch vorgegeben werden.

Die Höhe der Temperaturen, auf welche der Mittelbereich 9 bzw. die Oberflächen 21,22 erhitzt werden hängt nicht zuletzt von der Zusammensetzung bzw. den in den Kunststoffschaumblock bzw. in der Schaumstoffplatte 1 enthaltenen Zuschlagstoffen ab. Wie nachstehend noch näher erläutert werden wird, ist es bei Schaumstoffplatten 1, in welchen Altkunststoffe, beispielsweise auch Duroplaste oder Thermoplaste oder zerhackte oder zerrissene Reste von Schaumkunststoffen verschiedenster Zusammensetzungen enthalten sind, möglich, vor allem bei einem Anteil von Zuschlagstoffen, deren Erstarrungstemperatur bzw. deren Einfriertemperatur bzw. deren Fließpunkt höher ist, als derjenige des zur Herstellung des Kunststoffschaumblockes bzw. der Schaumstoffplatte 1 verwendeten Kunststoffschaums, die Erwärmungstemperatur bzw. die Energiezufuhr höher anzusetzen, als wenn ein reiner Schaumkunststoff ohne Zuschlagstoffe bzw. ohne Altkunststoffe oder Recyclingmaterialien verwendet wird. Dadurch ist es möglich, in einer der Heizvorrichtung 42 nachgeordneten Formpresse 44, die z.B. mit hydraulischen Preßstempeln 45 versehen sein kann, eine ausreichende Verdichtung und Verbindung der Zellgerüste bzw. Zellwände durchzuführen. Die Formpresse 44 weist ein in etwa in einer horizontalen Ebene geteiltes Formwerkzeug 46 auf, wobei insbesondere ein Oberteil 47 über Antriebsmittel 48 z. B. Hydraulikzylinder 49 in vertikaler Richtung und in Richtung eines Unterteils 50 verstellbar ist.

Der Unterteil 50 des Formwerkzeuges 46 ist bevorzugt gleichzeitig als Stanzmatrize 51 ausgebildet und auf einem Horizontalförderer 52 gelagert. Nach dem Öffnen des Formwerkzeuges 46 wird der Unterteil 50 mit der darauf gelagerten und umgeformten Schaumstoffplatte 1 aus dem Bereich der Formpresse 44 in eine dieser nachgeordneten Stanzmaschine 53 z. B. eine Hydraulikpresse 54 verfahren, in welcher eine Stanzpatrize 55 in Richtung der durch den Unterteil 50 gebildeten Stanzmatrize 51 verstellbar und über einen Hydraulikzylinder 56 bewegbar gelagert ist.

Während in diesem Formwerkzeug 46 die Druckbeaufschlagung der zumindest in der Kern zone 27 über den Einfrierpunkt erwärmten Schaumstoffplatte 1 und damit die Verdichtung in diesem Bereich bzw. die Umformung der Schaumstoffplatte 1 auf eine dem Konturenverlauf des Oberteil 47 und des Unterteils 50 entsprechenden Form erfolgt, wird unmittelbar nachfolgend auf die Druckaufbringung durch das Formwerkzeug 46 die Schaumstoffplatte 1 unter den Einfrierpunkt abgekühlt und damit die Gefügestruktur im Mittelbereich und/oder im Oberflächenbereich in der durch das Formwerkzeug 46 vorgegebenen Form fixiert. Vor allem dann, wenn der Kunststoffschaumblock bzw. die Schaumstoffplatte 1 einen überwiegenden Anteil von offenen Zellen bzw. nach der Verdichtung im Formwerkzeug 46 ebenso noch einen ausreichenden Anteil an offenen Zellen aufweist, kann die Kühlung zumindest in denjenigen Bereichen in denen noch genügend offene Zellen vorhanden sind, durch das Durchblasen von Kühlluft erfolgen, sodaß die in den beheizten Formflächen vorhandene Wärmeenergie nicht zur Gänze vernichtet werden muß um ein Einfrieren der thermisch gecrackten Bereiche des Kunststoffschaumblockes bzw. der Schaumstoffplatte 1 zu ermöglichen. In jedem Fall hat die Abkühlung des Kunststoffschaumblockes bzw. der Schaumstoffplatte 1 unter dem Plastifizierpunkt zu erfolgen, sodaß die elastische Rückfederung nach dem Crackvorgang entsprechend berücksichtigt ist.

Durch den in der Stanzmaschine 53 erfolgenden Konturenschnitt wird die durch die Umrißform der Stanzmatrize 51 bzw. Stanzpatrize 55 vorgegebene Umrißform der umgeformten Schaumstoffplatte 1 erreicht, wobei nach durchgeführter Stanzung und Entnahme eines so erzielten Formkörpers 57 der Unterteil 50, des Formwerkzeuges 46 mittels des Horizontalförderers 52 wieder in seine Ausgangslage im Bereich der Formpresse 44 für den Umformvorgang der nachfolgenden Schaumstoffplatte 1, die in der Zwischenzeit erhitzt wurde, verbracht wird.

Diese Anlagenkonfiguration ermöglicht die Durchführung des erfindungsgemäßen Verfahrens bei gleichzeitig kurzer Zykluszeit und gleichmäßiger Produktqualität.

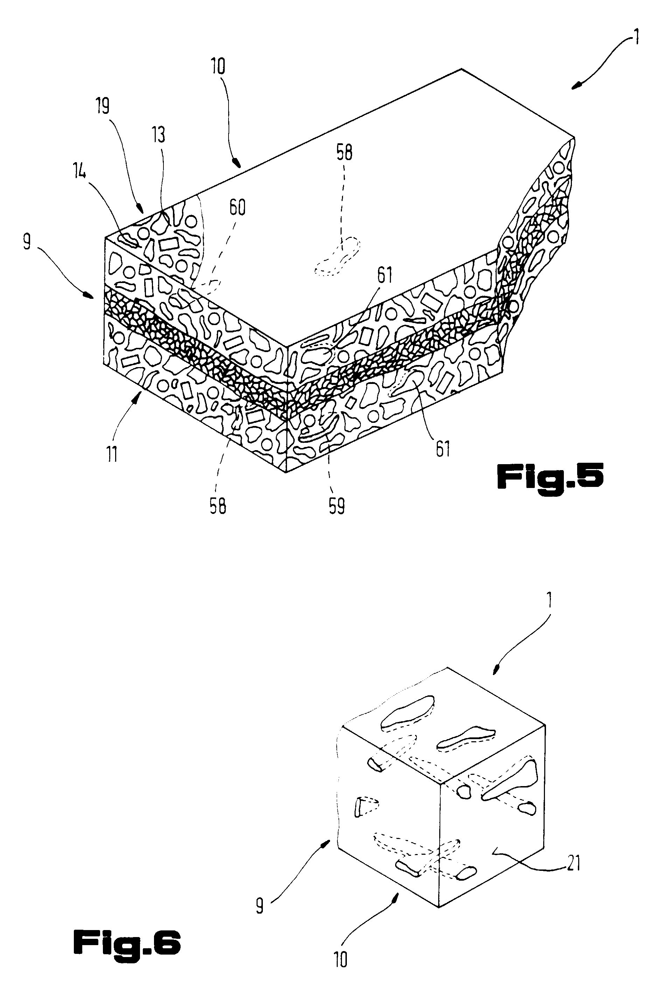

In Fig. 5 ist eine erfindungsgemäße Schaumstoffplatte 1 gezeigt, die aus einem Kunststoffschaum hergestellt ist. Dabei kann es sich um einen Polyäther,- Polymethan-, Phenol- oder einen Polyurethanschaum mit einem Raumgewicht zwischen 40 und 500 kg/m³ handeln. Dieser Schaumstoff 19, der überwiegend offenzellig ist und von welchem schematisch Zellstege 13,14 gezeigt sind, ist mit Füllmaterialien 58,59,60,61 die schematisch durch unterschiedliche Umrißformen nur im Bereich der nichtverdichteten Randbereiche 10,11 schematisch eingetragen sind, versetzt. Selbstverständlich sind diese Füllmaterialien 58 bis 61 nicht nur in den Randbereichen 10,11, sondern auch im Mittelbereich 9 vorhanden. Um jedoch die Übersichtlichkeit der Zeichnung zu wahren, wurden sie im Mittelbereich 9 nicht eingezeichnet.

Bei den Füllmaterialien 58 und 59 kann es sich nun um wiederverwertbare Kunststoffabfälle aus Schaumkunststoffen, wie bei den Füllmaterialien 58 bzw. Duroplasten, wie bei den Füllmaterialien 59 handeln. So können beispielsweise während der Produktion anfallende Schnittabfälle der Kunststoffschäume durch entsprechende Vorbehandlungen auf Flocken zerschnitten bzw. zerrissen werden, um dann als Füllmaterial in die neu herzustellende Schaumstoffplatte 1 bzw. einen Schaumstoffkunststoffblock eingeschäumt zu werden. Die Füllmaterialien 59 aus Duroplasten können neben PVC auch Flocken aus Polyäthylen, Polyäthylenterephtalat (PET), ABS, Polyolefinen, Phenolen, Polypropylene oder Polysterol handeln. Weiters ist es aber auch möglich, Füllmaterialien 60 zu verwenden, die durch Textilabfälle aus Kunst-bzw. Naturfasern gebildet sein können. Diese ebenfalls aus kleinen Stücken bzw. Flocken bestehenden Textilabfälle könne Recyclingprodukte aus alten Teppichen, Kleidung, Vorhängen und dgl. sein. Schließlich ist es auch möglich, als Füllmaterialien 61 mineralische Stoffe, wie beispielsweise Kreide oder dgl. zu verwenden oder feuerhemmende Zusätze, wie Aluminiumhydroxid oder dgl. einzumengen. Sollen die nachfolgend in zumindest einigen Bereichen thermisch verdichteten bzw. gecrackten Schaumstoffplatten 1 spezielle Festigkeitseigenschaften und Dichteverhältnisse aufweisen, ist es natürlich auch möglich, Fäden oder Fasern, bzw. aus derartigen Fäden oder Fasern hergestellte Gewirke, Gewebe, Netze oder Gitter oder auf gewisse Länge abgestimmte Fasern einzuarbeiten.

Diese Füllmaterialien werden mit dem Rohmaterial, bevor dieses in eine Form zur Herstellung der Schaumstoffplatte 1 bzw. des Kunststoffschaumblokkes eingebracht wird, eingemischt und verteilen sich dadurch gleichzeitig in der Schaumstoffplatte 1 bzw. im Kunststoffschaumblock. Dabei ist selbstverständlich auch zu berücksichtigen, daß die zur Herstellung des Kunststoffschaumes verwendeten Grundmaterialien keine neu gewonnenen Rohmaterialien sein müssen, sondern auch aus Altprodukten hergestellte Recyclingmaterialien sein können.

In Fig. 6 ist noch gezeigt, daß auch im Bereich der Randbereiche 10,11, insbesondere in den den Oberflächen 21,22 benachbarten Bereichen zusätzlich zum Mittelbereich 9 eine Verdichtung der Zellstruktur durch eine thermische Verformung bzw. einen Crackvorgang erfolgen kann. In dieser Darstellung ist auch schematisch angedeutet, daß trotz der Verdichtung in den Randbereichen 10,11 die Oberflächen 21,22 nicht total verschlossen sind sondern noch immer eine große Anzahl an offenen Zellen aufweisen. Um jedoch eine gewisse Mindestluftdurchlässigkeit durch die Oberflächen 21,22 derartiger Kunststoffschaumblöcke bzw. Schaumstoffplatten 1 zu ermöglichen, kann auch vorgesehen sein, daß die Platten nach dem thermischen Verdichten genadelt werden.

Darunter ist zu verstehen, daß durch den fertigen Kunststoffschaumblock bzw. die Schaumstoffplatte 1 erhitzte Nadeln bzw. Hohlkörper zumindest durch den Randbereich 10,11 hindurchgestoßen werden. Dadurch werden Hohlräume freigeschmolzen, durch die die Luft in die an die Oberflächenbereiche anschließenden unversehrten offenen Zellen der Schaumstoffplatte 1 bzw. des Kunststoffschaumblockes eintreten kann.

Des weiteren sind zum besseren Verständnis der erfindungsgemäßen Ausbildungen diese zum Teil schematisch und unproportional dargestellt.

## Patentansprüche

1. Formteil aus einer oder mehreren Schaumstoffplatten (1) aus einem weichen, gegebenenfalls elastischen Schaumstoff (19) mit zumindest bereichsweise bleibend verformten Zellstegen (13,14) und/oder Zellwänden (12), dadurch gekennzeichnet, daß ein Mittelbereich (9) in zumindest einer Schaumstoffplatte auf ein höheres Raumgewicht bleibend plastisch verformt ist, als zumindest ein zwischen diesem Mittelbereich (9) und den Oberflächen (5,6,21,22) liegender Zwischenbereich (25,26) der Schaumstoffplatte (1).

2. Formteil nach Anspruch 1, dadurch gekennzeichnet, daß die Zellwände (12,16) bzw. Zellstege (13,14,15) im Mittelbereich (9) der Schaumstoffplatte (1) auf ein höheres Raumgewicht und eine höhere Dichte thermisch verdichtet sind.

3. Formteil nach Anspruch 1 oder 2, dadurch gekennzeichnet, daß der Mittelbereich (9) durch plastische Verformung zu einem Profilelement (20) umgeformt ist.

4. Formteil nach einem oder mehreren der Ansprüche 1 bis 3, dadurch gekennzeichnet, daß ein Verdichtungsfaktor des Mittelbereichs (9) gegenüber einem diesen in Richtung der Oberfläche (5,6,21,22) der Schaumstoffplatte (1) bzw. des Formteils benachbarten Zwischenbereich (25,26) zwischen 5 und 50 beträgt.

5. Formteil nach einem oder mehreren der Ansprüche 1 bis 4, dadurch gekennzeichnet, daß ein Raumgewicht in einer der Oberfläche (5,6,21,22) der Schaumstoffplatte (1) benachbarten Randzone (23,24) ca. 40 kg/m³ bis 500 kg/m³ beträgt und der Mittelbereich (9) der Schaumstoffplatte (1) ein Raumgewicht von ca. 1.200 kg/m³ bis 2.500 kg/m³ aufweist.

6. Formteil nach einem oder mehreren der Ansprüche 1 bis 5, dadurch gekennzeichnet, daß eine Dichte der Schaumstoffplatte (1) vom Mittelbereich (9) in Richtung der Oberfläche (5,6,21,22) abnimmt.

7. Formteil nach einem oder mehreren der Ansprüche 1 bis 6, dadurch gekennzeichnet, daß eine oder mehrere Oberflächen (5,6,21,22) der Schaumstoffplatte (1) eine gegenüber einem Zwischenbereich (25,26) zwischen dem Mittelbereich (9) und den Randzonen (23,24) eine höhere Dichte durch thermisch verformte und verdichtete Zellwände (12,16) und/oder Zellstege (13,14,15) bzw. Zellgefüge aufweist.

8. Formteil nach einem oder mehreren der Ansprüche 1 bis 7, dadurch gekennzeichnet, daß im Mittelbereich (9) und/oder dem Zwischenbereich oder -bereichen (25,26) Verstärkungselemente (7) eingesetzt und/oder eingebettet sind.

9. Formteil nach einem oder mehreren der Ansprüche 1 bis 8, dadurch gekennzeichnet, daß in den Randzonen (23,24) der Schaumstoffplatte (1) Verstärkungselemente (7) eingesetzt und/oder eingebettet bzw. angeformt oder angeklebt sind.

10. Formteil nach einem oder mehreren der Ansprüche 1 bis 9, dadurch gekennzeichnet, daß die Schaumstoffplatte (1) aus einem Weichschaumstoffkörper gebildet ist.

11. Formteil nach einem oder mehreren der Ansprüche 1 bis 10, dadurch gekennzeichnet, daß der Mittelbereich (9) und/oder der Zwischenbereich (25,26) und/oder die Randzone (23,24) mit Füllmaterial (58 bis 61), insbesondere Kunststoffabfällen versetzt ist.

12. Formteil nach einem oder mehreren der Ansprüche 1 bis 11, dadurch gekennzeichnet, daß das Füllmaterial (58 bis 61) durch Schaumstoffgranulate aus einem weichen Schaumstoff oder thermoplastischem, gegebenenfalls mit mineralischen oder duroplastischen Verunreinigungen versehenen Kunststoffabfällen gebildet sind.

13. Formteil nach einem oder mehreren der Ansprüche 1 bis 12, dadurch gekennzeichnet, daß die Verstärkungselemente (7) durch Aluminium- bzw. Kunststoffbauteile aus Fasern, Fäden und/oder Platten und/oder Profilen gebildet sind.

14. Formteil nach einem oder mehreren der Ansprüche 1 bis 13, dadurch gekennzeichnet, daß die Verstärkungselemente (7) durch Stähle mit Speziallegierung, insbesondere Netze und/oder Gitter aus derartigen Materialien gebildet sind.

15. Verfahren zur Herstellung von Formteilen aus einer oder mehreren Schaumstoffplatten (1), aus einem weichen, gegebenenfalls elastischen Schaumstoff (19), bei der daran anschließend durch Einwirkung von Druck und/oder Temperatur bereichsweise die Zellstege (13,14,15) und/oder Zellwände (12,16) zumindest teilweise zerstört und/oder bleibend verformt werden, dadurch gekennzeichnet, daß die Schaumstoffplatte (1) mit einer Energiestrahlung bevorzugt unter gleichzeitiger Druckbelastung bzw. Verdichtung beaufschlagt wird, die über an die Moleküle abgegebene Schwingungsenergie ein Erwärmen oder ein Erhitzen der Materialbestandteile der Schaumstoffplatte (1) vom Mittelbereich (9) in Richtung der Randzonen (23,24) bewirkt, derart daß nur der Mittelbereich (9) auf ein höheres Raumgewicht bleibend plastisch verformt wird.

16. Verfahren nach Anspruch 15, dadurch gekennzeichnet, daß die Energiestrahlung durch eine Hochfrequenzstrahlung bzw. eine Mikrowelle gebildet wird, welche bevorzugt eine Frequenz zwischen 20 MHz und 40 MHz aufweist.

17. Verfahren nach Anspruch 15 oder 16, dadurch gekennzeichnet, daß das Zellgewebe bzw. die in die Schaumstoffplatte (1) bzw. den Weichschaumstoff integrierten Kunststoffabfälle bzw. Schaumstoffgranulate im Mittelbereich (9) der Schaumstoffplatte (1) über ihren Einfrierpunkt erhitzt und zumindest an ihren Oberflächen (5,6,21,22) in einen plastischen Zustand übergeführt werden, worauf sie durch Einwirkung einer Druckkraft bzw. durch Verdichtung der Schaumstoffplatte (1) zu einem insbesondere plattenförmigen Profilelement (20) verdichtet werden und daß danach die Druckbelastung auf die Schaumstoffplatte (1) so lange aufrecht erhalten wird, bis die plastifizierten Zellwände (12,16) bzw. Zellstrukturen der Kunststoffabfälle bzw. Schaumstoffgranulate zumindest zum Teil unter den Einfrierpunkt abgekühlt sind.

18. Verfahren nach einem oder mehreren der Ansprüche 15 bis 17, dadurch gekennzeichnet, daß vor dem Herstellen der Schaumstoffplatte (1) Füllmaterialien aus Thermo- und/oder Duroplasten und/oder Textilien und/oder Mineralien, dem Rohmaterial zur Herstellung eines Kunststoffschaumes in zermahlener, zerrissener oder zerschnittener Form zugesetzt werden.

19. Verfahren nach einem oder mehreren der Ansprüche 15 bis 18, dadurch gekennzeichnet, daß die Füllmaterialien auf eine maximale Flockengröße von 125 mm³ zerkleinert werden.

20. Verfahren nach einem oder mehreren der Ansprüche 15 bis 19, dadurch gekennzeichnet, daß vor oder nach dem Herstellen des Profilelementes (20) in einer Formpresse (44) zwischen den unverdichteten Randzonen (23,24) bzw. dem Mittelbereich (9) und der Oberfläche (5,6,21,22) durchgehende Öffnungen hergestellt werden.

21. Verfahren nach einem oder mehreren der Ansprüche 15 bis 20, dadurch gekennzeichnet, daß die Erwärmungstemperatur im thermisch zu verdichtenden Mittelbereich (9) bzw. den Randzonen (23,24) oberhalb der Einfriertemperatur des Großteils der als Füllmaterialien beigemengten Kunststoffmaterialien liegt.

## Claims

1. Shaped article of one or a plurality of foam sheets (1) made of soft, if necessary elastic foam material (19) with at least partially remaining deformed cell webs (13, 14) and/or cell walls (12), characterised in that a central region (9) of at least one foam sheet is deformed, remaining plastic, to a higher bulk density than at least one intermediate region (25, 26) of the foam sheet (1) situated between the central region (9) and the surfaces (5, 6, 21, 22).

2. Shaped article according to claim 1, characterised in that the cell walls (12, 16) or cell webs (13, 14, 15) are thermally compacted in the central region (9) of the foam sheet (1) to a higher bulk density and a higher density.

3. Shaped article according to claim 1 or 2, characterised in that the central region (9) is reshaped by plastic deformation into a profile element (20).

4. Shaped article according to one or more of claims 1 to 3, characterised in that a compression factor of the central region (9) relative to an intermediate region (25, 26) adjacent to the latter in the direction of the surface (5, 6, 21, 22) of the foam sheet (1) or the shaped article is between 5 and 50.

5. Shaped article according to one or more of claims 1 to 4, characterised in that the bulk density in an edge zone (23, 24) adjacent to the surface (5, 6, 21, 22) of the foam sheet (1) is circa 40 kg/m³ to 500 kg/m³ and the central region (9) of the foam sheet (1) has a bulk density of circa 1,200 kg/m³ to 2,500 kg/m³.

6. Shaped article according to one or more of claims 1 to 5, characterised in that the density of the foam sheet (1) is reduced from the central region (9) in the direction of the surface (5, 6, 21, 22).

7. Shaped article according to one or more of claims 1 to 6, characterised in that one or several surfaces (5, 6, 21, 22) of the foam sheet (1) has, relative to the intermediate region (25, 26) between the central region (9) and the edge zones (23, 24), a higher density by means of thermally deformed and compacted cell walls (12, 16) and/or cell webs (13, 14, 15) or cell structure.

8. Shaped article according to one or more of claims 1 to 7, characterised in that there are inserted and/or embedded in the central region (9) and/or the intermediate region or regions (25, 26) reinforcement elements (7).

9. Shaped article according to one or more of claims 1 to 8, characterised in that in the edge zones (23, 24) of the foam sheet (1) reinforcement elements (7) are inserted and/or embedded or formed or glued on.

10. Shaped article according to one or more of claims 1 to 9, characterised in that the foam sheet (1) is formed from a soft foam material body.

11. Shaped article according to one or more of claims 1 to 10, characterised in that the central region (9) and/or the intermediate region (25, 26) and/or the edge zone (23, 24) is replaced with filling material (58 to 61), especially plastic material waste.

12. Shaped article according to one or more of claims 1 to 11, characterised in that the filling material (58 to 61) is formed from foam material granules made of a soft foam material or thermoplastic plastic material waste, if necessary provided with mineral or duroplastic impurities.

13. Shaped article according to one or more of claims 1 to 12, characterised in that the reinforcement elements (7) are formed by aluminium or plastic components made of fibres, threads and/or slabs and/or profiles.

14. Shaped article according to one or more of claims 1 to 13, characterised in that the reinforcement elements (7) are formed from with special steel alloys, especially meshes and/or lattices made of such materials.

15. Method for producing shaped articles of one or a plurality of foam sheets (1), made from a soft, if necessary elastic foam material (19) in which, as a consequence of the effect of pressure and/or temperature, in certain regions the cell webs (13, 14, 15) and/or cell walls (12, 16) are at least partly destroyed and/or permanently deformed, characterised in that the foam sheet (1) is impinged upon by radiation energy preferably during simultaneous application of pressure or compression which effects, via an oscillating energy given to the molecules, warming or heating of the material components of the foam sheet (1) from the central region (9) in the direction of the edge zones (23, 24) in such a way that only the central region (9) is permanently plastically deformed to a higher bulk density.

16. Method according to claim 15, characterised in that radiation of power is produced by high frequency radiation or a microwave which preferably has a frequency between 20 MHz and 40 MHz.

17. Method according to claim 15 or 16, characterised in that the cellular tissue or the plastic material waste or foam material granules which are integrated into the foam sheet or the soft foam material in the central region (9) of the foam sheet (1) are converted into a plastic state by heating above their transformation temperature and at least on their surfaces (5, 6, 21, 22), after which they are compacted by the effect of a compression force or by compression of the foam sheet (1) into an especially slab-shaped profile element (20) and in that the application of pressure to the foam sheet (1) is maintained until the plasticised cell walls (12, 16) or cell structures of the plastic material waste or foam material granules have been cooled at least in part below the transformation temperature.

18. Method according to one or more of claims 15 to 17, characterised in that before producing the foam sheet (1) there are added to the raw material to produce a plastic material foam in pulverised, shredded or chopped form filling materials made from thermoplastic and/or duroplastic and/or textiles and/or minerals.

19. Method according to one or more of claims 15 to 18, characterised in that the filling materials are reduced in size to a maximal particle size of 125 mm³.

20. Method according to one or more of claims 15 to 19, characterised in that before or after production of the profile element (20) in a moulding press (44) direct openings are produced between the non-compacted edge zones (23, 24) or the central region (9) and the surface (5, 6, 21, 22).

21. Method according to one or more of claims 15 to 20, characterised in that the heating temperature in the central region (9), which is to be thermally compacted, or in the edge zones (23, 24) lies above the transformation temperature of the greater part of the plastic materials added as filling materials.

## Revendications

1. Pièce façonnée d'une ou de plusieurs plaques en matière alvéolaire (1) en une matière alvéolaire (19) souple, le cas échéant élastique, avec des nervures cellulaires (13, 14) et/ou parois cellulaires (12) déformées de manière permanente au moins par zones, caractérisée en ce qu'une zone centrale (9) dans au moins une plaque en matière alvéolaire a subi une déformation plastique permanente à un poids spécifique plus élevé qu'au moins une zone intermédiaire (25, 26) de la plaque en matière alvéolaire (1) située entre cette zone centrale (9) et les surfaces (5, 6, 21, 22).

2. Pièce façonnée selon la revendication 1, caractérisée en ce que les parois cellulaires (12, 16) respectivement les nervures cellulaires (13, 14, 15) sont compactées thermiquement dans la zone centrale (9) de la plaque en matière alvéolaire (20) à un poids spécifique plus élevé et une densité plus élevée.

3. Pièce façonnée selon la revendication 1 ou 2, caractérisée en ce que la zone centrale (9) est transformée par déformation plastique en un élément profilé (20).

4. Pièce façonnée selon l'une ou plusieurs des revendications 1 à 3, caractérisée en ce qu'un facteur de densification de la zone centrale (9) par rapport à une zone intermédiaire (25, 26) avoisinant celle-ci en direction de la surface (5, 6, 21, 22) de la plaque en matière alvéolaire (1) respectivement de la pièce façonnée est comprise entre 5 et 50.

5. Pièce façonnée selon l'une ou plusieurs des revendications 1 à 4, caractérisée en ce qu'un poids spécifique dans une zone de bord (23, 24) avoisinant la surface (5, 6, 21, 22) de la plaque en matière alvéolaire (1) est environ de 40 kg/m³ à 500 kg/m³ et que la zone centrale (9) de la plaque en matière alvéolaire (1) présente un poids spécifique d'environ 1,200 kg/m³ à 2,500 kg/m³.

6. Pièce façonnée selon l'une ou plusieurs des revendications 1 à 5, caractérisée en ce qu'une densité de la plaque en matière alvéolaire (1) diminue de la zone centrale (9) en direction de la surface (5, 6, 21, 22).

7. Pièce façonnée selon l'une ou plusieurs des revendications 1 à 6, caractérisée en ce qu'une ou plusieurs surfaces (5, 6, 21, 22) de la plaque en matière alvéolaire (1) présente une densité plus élevée par rapport à une zone intermédiaire (25, 26) entre la zone centrale (9) et les zones de bord (23, 24), par des parois cellulaires déformées thermiquement et compactées (12, 16) et/ou des nervures cellulaires (13, 14, 15) respectivement des structures cellulaires.

8. Pièce façonnée selon l'une ou plusieurs des revendications 1 à 7, caractérisée en ce que dans la zone centrale (9) et/ou la ou les zones intermédiaires (25, 26), des éléments de renforcement (7) sont mis en place et/ou noyés.

9. Pièce façonnée selon l'une ou plusieurs des revendications 1 à 8, caractérisée en ce que sont mis en place et/ou noyés respectivement rapportés par formage ou collés dans les zones de bord (23, 24) de la plaque en matière alvéolaire (1) des éléments de renforcement (7).

10. Pièce façonnée selon l'une ou plusieurs des revendications 1 à 9, caractérisée en ce que la plaque en matière alvéolaire (1) est réalisée en un corps de matière alvéolaire souple.

11. Pièce façonnée selon l'une ou plusieurs des revendications 1 à 10, caractérisée en ce que la zone centrale (9) et/ou la zone intermédiaire (25, 26) et/ou la zone de bord (23, 24) est mélangée avec des matières de charge (58 à 61), notamment de déchets en matière synthétique.

12. Pièce façonnée selon l'une ou plusieurs des revendications 1 à 11, caractérisée en ce que la matière de charge (58 à 61) est formée par des granulés de matière alvéolaire en une matière alvéolaire souple ou par des déchets en matière synthétique thermoplastique, présentant le cas échéant des impuretés minérales ou de résine thermodurcissable.

13. Pièce façonnée selon l'une ou plusieurs des revendications 1 à 12, caractérisée en ce que les éléments de renforcement (7) sont formés par des composants en aluminium respectivement en matière synthétique en fibres, fils et/ou plaques et/ou profilés.

14. Pièce façonnée selon l'une ou plusieurs des revendications 1 à 13, caractérisée en ce que les éléments de renforcement (7) sont formés par des aciers d'un alliage spécial, notamment de filets et/ou grilles en de tels matériaux.

15. Procédé de fabrication de pièces façonnées à partir d'une ou de plusieurs plaques en matière alvéolaire (1), en une matière alvéolaire souple (19), le cas échéant élastique, où ensuite, sous l'effet de la pression et/ou de la température, par zones les nervures cellulaires (13, 14, 15) et/ou les parois cellulaires (12, 16) sont au moins partiellement détruites et/ou sont déformées d'une manière permanente, caractérisé en ce que la plaque en matière alvéolaire (1) est sollicitée par un rayonnement d'énergie de préférence sous une sollicitation de pression respectivement compactage simultanée, qui provoque par l'énergie d'oscillation transmise aux molécules un échauffement des composants de matériaux de la plaque en matière alvéolaire (1) de la zone centrale (9) en direction des zones de bord (23, 24) de façon que seulement la zone centrale (g) reçoit une déformation plastique permanente à un poids spécifique plus élevé.

16. Procédé selon la revendication 15, caractérisé en ce que le rayonnement d'énergie est constitué par un rayonnement haute fréquence respectivement une hyperfréquence qui présente de préférence une fréquence comprise entre 20 MHz et 40 MHz.

17. Procédé selon la revendication 15 ou 16, caractérisé en ce que le tissu cellulaire respectivement les déchets en matière synthétique respectivement les granulés en matière alvéolaire intégrés dans la plaque en matière alvéolaire (1) respectivement la matière alvéolaire souple sont chauffés dans la zone centrale (9) de la plaque en matière alvéolaire (1) au-delà de leur point de solidification et sont amenés au moins à leurs surfaces (5, 6, 21, 22) dans un état plastique, à la suite de quoi ils sont compactés sous l'effet d'une force de pression respectivement par compactage de la plaque en matière alvéolaire (1) en un élément profilé (20) notamment en forme de plaque et qu'ensuite la sollicitation par la pression exercée sur la plaque en matière alvéolaire (1) est maintenue jusqu'à ce que les parois cellulaires plastifiées (12, 16) respectivement les structures cellulaires des déchets en matière synthétique respectivement des granulés en matière alvéolaire soient refroidis au moins en partie en-dessous du point de solidification.

18. Procédé selon l'une ou plusieurs des revendications 15 à 17, caractérisé en ce qu'avant la fabrication de la plaque en matière alvéolaire (1), des matières de charge en matières thermoplastiques et/ou thermodurcissables et/ou des textiles et/ou des minéraux sont ajoutés à la matière brute pour la fabrication d'une mousse de matière synthétique sous forme broyée, déchirée ou découpée.

19. Procédé selon l'une ou plusieurs des revendications 15 à 18, caractérisé en ce que les matières de charge sont diminuées à une grandeur de flocon maximale de 125 mm³.

20. Procédé selon l'une ou plusieurs des revendications 15 à 19, caractérisé en ce qu'avant ou après la fabrication de l'élément profilé (20), des ouvertures traversantes sont ménagées dans une presse à mouler (44) entre les zones de bord non compactées (23, 24) respectivement la zone centrale (9) et la surface (5, 6, 21, 22).

21. Procédé selon l'une ou plusieurs des revendications 15 à 20, caractérisé en ce que la température d'échauffement dans la zone centrale (9) respectivement les zones de bord (23, 24) à compacter thermiquement se situe au-dessus de la température de solidification de la plus grande partie des matières synthétiques ajoutées comme matières de charge.
